Europäisches Patentamt

European Patent Office

Office européen des brevets

(11) Publication number: **0 390 925**
**A1**

(12) **EUROPEAN PATENT APPLICATION**
**published in accordance with Art.**
**158(3) EPC**

(21) Application number: 89909261.3

(22) Date of filing: 21.03.89

(86) International application number:
PCT/SU89/00072

(87) International publication number:
WO 90/01671 (22.02.90 90/05)

(51) Int. Cl.5: **F16L 13/02, B23K 31/00**

(30) Priority: 12.08.88 SU 4460541

(43) Date of publication of application:
**10.10.90 Bulletin 90/41**

(84) Designated Contracting States:
**AT BE DE FR GB IT LU NL**

(71) Applicant: **INSTITUT ELEKTROSVARKI IMENI E.O.PATONA AKADEMII NAUK UKRAINSKOI SSR**
**ul. Bozhenko, 11**
**Kiev, 252650(SU)**

(72) Inventor: **PATON, Boris Evgenievich**
**ul. Chkalova, 41a-26**
**Kiev, 252034(SU)**
Inventor: **MEDOVAR, Boris Izrailevich**
**ul. Anri Barbjusa, 22/26-109**
**Kiev, 252642(SU)**
Inventor: **BOGACHENKO, Alexei Georgievich**
**ul. Sapernoe pole, 26a-30**
**Kiev, 252042(SU)**
Inventor: **SAENKO, Vladimir Yakovlevich**

**ul. Teremkovskaya, 5-23**
**Kiev, 252207(SU)**
Inventor: **US, Vasily Ivanovich**
**ul. Filatova, 1/22-9**
**Kiev, 252042(SU)**
Inventor: **MEDOVAR, Lev Borisovich**
**ul. Anri Barbjusa, 5b-62**
**Kiev, 252150(SU)**
Inventor: **PIVOVARSKY, Nilolai Borisovich**
**ul. Marshala Yakubovskogo, 7-30**
**Kiev, 252191(SU)**
Inventor: **BESHENTSEV, Anatoly Vasilievich**
**ul. Demeevskaya, 53-28**
**Kiev, 252109(SU)**
Inventor: **POSTIZHENKO, Vladimir Kalistratovich**
**ul. Observatornaya, 13/15-17**
**Kiev, 252053(SU)**

(74) Representative: **Lerwill, John et al**
**A.A. Thornton & Co. Northumberland House**
**303-306 High Holborn**
**London, WC1V 7LE(GB)**

(54) **CRACK GROWTH LIMITER IN HIGH-PRESSURE WELDED PIPELINES AND METHOD OF MAKING IT.**

(57) A crack growth limiter (1) consists of a pipe section (5) with insertions (6) of elongate form built into its walls and oriented at an angle to the expected crack growth direction. The insertions (6) are made of a material whose strength is equal to or exceeds that of the material of the limiter (1). A method of making said crack growth limiter (1) provides for placing in the casting mould, before pouring the molten metal, the insertions of elongate form and for welding the sheet blank, during the pipe-making process, along those edges of the blank where the end-faces of the insertions are situated.

FIG.3

- 1 -

# CRACK PROPAGATION ARRESTER FOR H.P.WELDED PIPELINES AND METHOD FOR PRODUCTION THEREOF

## Field of the Art

Thr present invention relates to the construction of trunk pipelines and, more particularly, it relates to the crack propagation arrester in H.P. welded piping and a method for production thereof.

## Prior Art

Widely known in the prior art are the designs of crack propagation arresters in the form of a shell of the same diameter as the pipeline, reinforced by a band or a cable. The shell band or cable take the elastic energy released in the propagation of the crack, resist to opening of its lips, thus providing conditions for changing its trajectory from longitudinal to helicoidal followed by its stopping.

However, all these arrester designs both complicate the pipeline building technology and increase its cost.

Known in the prior art is a crack propagation arrester for H.P. welded piping in the form of a cylindrical pipe of the same diameter as the pipeline, made of a multilayer set of sheets of which at least one is provided with slits oriented at an angle to the supposed direction of the developing crack (US, A, 4383556).

The rupture developing in a trunk pipeline and penetrating into the body of the multilayer crack arrester encounters the slits in the arrester layers and, having stopped at one slit edge, cannot immediately begin on its other edge.

However, the multilayer wall of such an arrester has no connectors between the layers. In fact, the arrester wall is assembled of individual sheets. Such an arrangement hampers its welding to the base pipe of the pipeline in view of clearances between the layers which brings about loosening of end edges and penetration into the clearances of nonmetallic inclusions and foreign matter. It becomes necessary to weld solid-wall branch pipes to the arrester

- 2 -

ends which reduces the efficiency of the arrester. The provision of slits impairs the strength of the arrester wall.

Apart from that, the linear dimensions of the arrester and its length are limited by the width of the strip used for the production of the crack propagation arrester.

Finally, there is a known crack arrester for H.P. welded pipelines in the form of a length of a cylindrical pipe of the same diameter as the pipeline, having in its body at least one structural element oriented at an angle to the supposed direction of propagation of the crack. The wall of the known arrester has a multilayer construction wherein at least one of its inner layers has an extended slit set at an angle to the longitudinal axis of the arrester. The end edges of the arrester are of a monolythic construction permitting easy welding of the arrester to the pipeline.

There is also a known method for the production of this arrester comprising hot rolling of arrester sheet blanks from ingots, making at least one structural element in the sheet blank at an angle to one of the blank sides then welding said sheet blank into a pipe according to the required geometric dimensions of the crack arrester (PCT/SU 84/00016).

In the known method the crack arrester blank is made in the form of a multilayer structure with an artificially made continuity break in at least one of its layers. According to this method the pipe welded from a multilayer sheet blank is made with the diameter smaller and the wall thickness larger than the required final geometric dimensions of the arrester after which the blank is heated, rolled out on a ring-reeling machine throughout the length of the pipe to the final geometric dimensions of the crack arrester, the layers being welded to one another in the course of reeling.

This method for the production of crack arresters

- 3 -

permits welding together of individual layers thus obtaining monolithic edges.

However, the arrester produced by the known method, like the one described above, is insufficiently stiff due the provision of slits which weaken the strength of its wall.

The known method fails to ensure accurate geometric dimensions of the arrester which guarantee its coaxiality with the pipeline piping. This leads to complication of laying and technological operations during pipeline construction (transportation, welding of pipes and application of insulating coating). The method is noted for a high labour consumption and calls for the provision of costly sophisticated equipment for rolling out the pipe--shaped multilayer blank.

Disclousure of the Invention

The main object of the invention resides in providing a crack propagation arrester for H.P. pipelines whose walls would be not inferior in strength to the base pipeline wall and would ensure reliable stopping of cracks propagation along the pipeline and in providing a method for the production of such an arrester which would permit the production of arresters with accurate geometric dimensions and without the use of costly equipment.

The essence of the invention resides in that in the crack propagation arrester for H.P. welded pipelines realized in the form of a length of cylindrical pipe of the same diameter as that of the pipeline, having in its body at least one structural element oriented at an engle to the supposed direction of crack development, according to the invention, said structural element has the form of an insert from a material whose strength is at least equal to that of the pipe material, said insert has an extended shape and the thickness $h \geqslant 0.3\ H$ where H=thickness of the pipe wall, which is located so that the projection of the insert on a plane perpendicular to the

- 4 -

pipe axis of symmetry is a ring coaxial with the pipe, the strength P of the insert connection with the material of the pipe at the jointing surfaces being within $0 < P < \sigma_T$ where $\sigma_T =$ yield point of the pipe material.

The insert may be made from the material of the pipe and from other materials whose strength is higher than that of the pipe material, for example, austenitic steel, ceramics, etc. The insert also may have a multilayer structure with the layers arranged square to the pipe axis of symmetry.

The essence of the invention resides also in that in the method for the production of a crack propagation arrester for H.P. pipelines by producing an ingot, making from it the crack arrester sheet blank by hot rolling, forming at least one structural element in the blank oriented at an angle to one side of the sheet and making a welded pipe from the sheet blank to the required geometric dimensions of the crack arrester wherein, according to the invention, the structural element is formed at the ingot-making stage by placing at least one insert into the mould before pouring in liquid metal, the strength of the material of said insert being at least equal to the strength of the material of the ingot being cast, said insert being of an extended shape and a thickness $h_1 \geqslant 0.3\ H_1$ where $H_1 =$ thickness of the ingot and, in the process of making a welded pipe from the sheet blank, the sheet blank is moulded so that the edges of the extended inserts are located on the sheet blank edges to be welded together.

The inserts may also be shaped as a rectangular parallelepiped in which case it is practicable that before placing the insert into the casting mould two parallel sides of the insert should be provided partly with a coating which prevents the fusion of the insert material with the ingot material and the ingot should be rolled so that the coated sides would be perpendicular to the plane of the sheet blank.

- 5 -

In the crack arrester for welded H.P. pipelines realized according to the present invention the structural element in the arrester body is made in the form of an insert whose strength may be even higher than the strength of the arrester proper and, at the same time, the strength of the joint between the insert and the material of the arrester wall over the mating surfaces is lower than the yield point of the arrester material. This has enabled the stiffness of the arrester (except the incontinuities, i.e. slits) to be raised substantially, thereby improving the reliability of the pipeline.

The method for the production of a crack propagation arrester for the H.P. welded pipelines realized in keeping with the present invention simplifies the production technology of the crack arrester by dispensing with the slit-making operation and rolling out the cylindrical blank on the reeling machine so that there is no need for the use of a costly reeling machine and steps up productivity while ensuring accurate geometric dimensions of the crack propagation arrester.

Brief Description of the Drawings

Now the invention will be described by way of example with relation to the accompanying drawings in which:

Fig.1 is a schematic diagram of a section of H.P. trunk pipeline with a built-in crack propagation arrester according to the invention;

Fig.2 is an isometric representation, partly sectionalized, of the crack propagation arrester for H.P. welded pipelines according to the invention;

Fig.3 - same as in Fig.1, longitudinal section;

Figs 4,5,6,7,8 - fragment A in Fig.3, enlarged (versions of insert design);

Fig.9 a,b,c,d - stages of realization of the method for the production of a crack propagation arrester according to the invention.

- 6 -

Best Mode of Carrying out the Invention

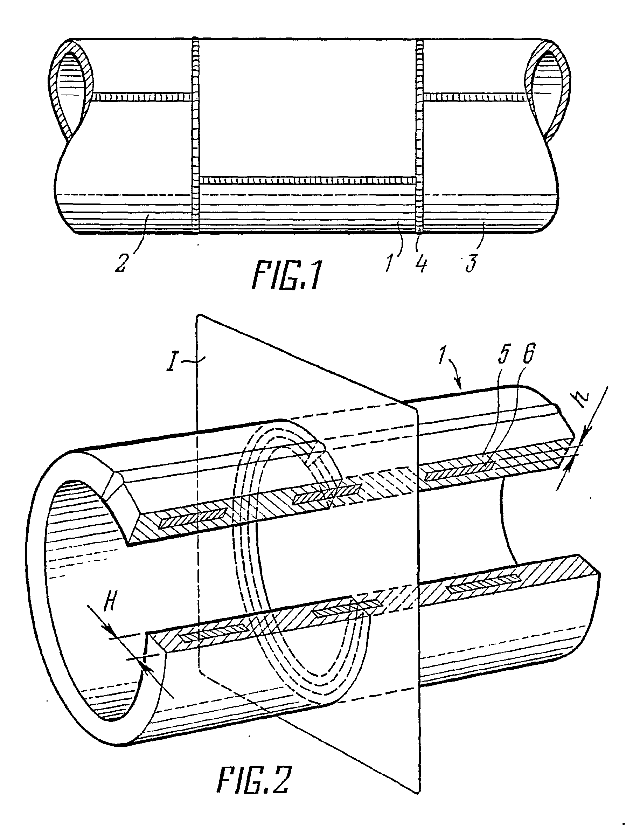

Shown in Fig.1 is a crack propagation arrester 1 according to the invention which is installed in a H.P. trunk pipeline ($\sim$7.5 MPa) between two adjacent sections 2,3 of the pipeline and connected with said sections by circular welds 4.

The crack propagation arrester 1 shown in Fig.2 is constituted by a length of a cylindrical pipe 5 of the same diameter as the pipeline and having in its body at least one (three, in the described version) structural elements 6.

The structural elements 6 have the form of inserts 6 of an extended shape with a thickness of $h \geqslant 0.3H$ where $H$ = wall thickness of the pipe 5 and arranged in the body of the pipe 5 at an angle $\alpha$ to the supposed direction of propagation of cracks (along the pipeline) so that the projection of the insert 6 on the plane 1 perpendicular to the axis of symmetry of the pipe 5 has the shape of a ring coaxial with the pipe 5. As a rule, the angle $\alpha$ approaches 90° but it can have any other value within $0° < \alpha < 180°$.

The minimum thickness h of the insert 6 is taken to be $\geqslant 0.3H$ proceeding from the assumption that at h smaller than 0.3H the longitudinal cracks may pass freely through the arrester while the maximum thickness h of the insert 6 is restricted by the mandatory requirement of locating it in the body of the pipe 5.

The strength of the joint between the insert 6 and the material of the pipe 5 on the mating surfaces lies whithin $0 < P < \sigma_y$, where P = strength of the joint and $\sigma_y$ = yield point of the material of the pipe 5.

When the strength of the joint between insert 6 and the material of the pipe 5 over the mating surfaces is equal to 0, there appear gaps between the adjoining surfaces which complicates the arrester production technology for example at the stage of welding the longitudinal

- 7 -

edges of the arrester sheet blank. When the strength of the joint between the insert 6 and the material of the pipe 5 over the adjoining surfaces is equal to, or larger than, $\sigma_y$ of the pipe material, the longitudinal cracks propagate just like they do in the pipeline having no arrester.

The inserts 6 are made of a material whose strength is at least equal to that of the material of the pipe 5. Thus, is one of the versions, the inserts 6 are made from the material of the pipe 5 while in another version they are made from austenitic steels whose impact strength at sub-zero temperatures down to -196°C is substantially higher than the impact strength of the material of the pipe 5.

In the third version the insert 6 may be made of ceramics,e.g. chamotte, magnesite, etc.

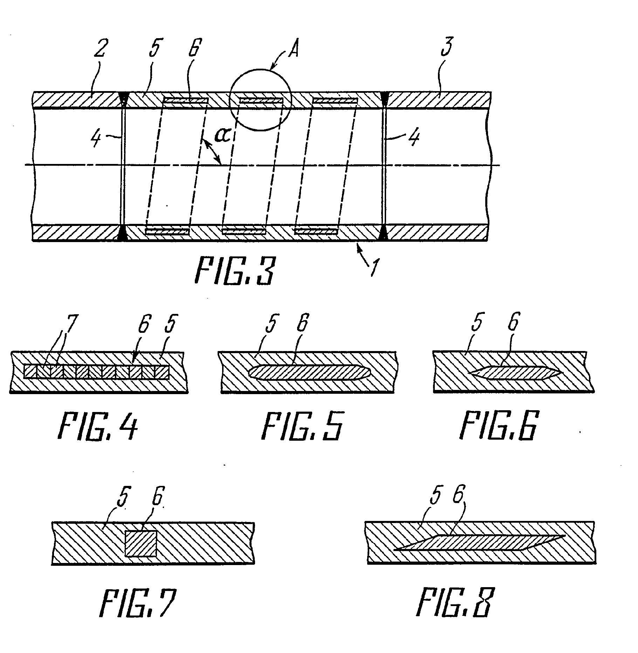

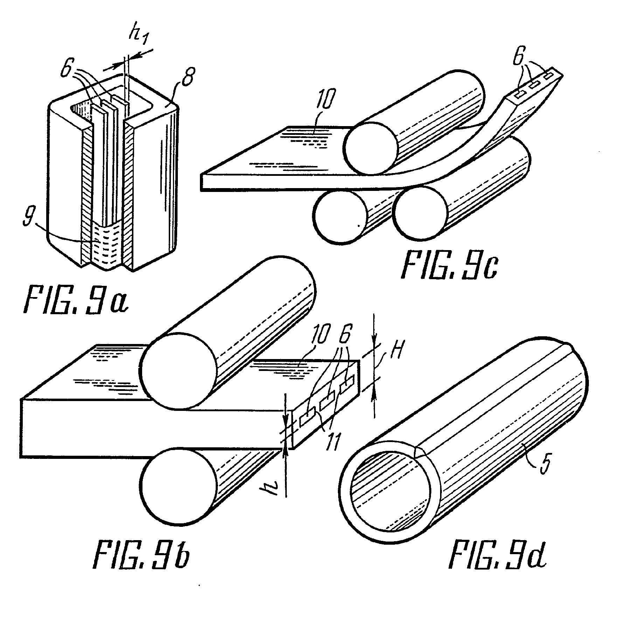

The insert 6 is an extended element whose one linear dimension is considerably larger than the other dimensions and whose cross section may be, for example, a rectangle, (Fig.4), ellipse (Fig.5), hexahedron (Fig.6), square. (Fig.7), parallelogram (Fig.8) and the like. Besides, the insert 6 may have a multilayer structure wherein the layers 7 (Fig.4) are perpendicular to the axis of symmetry of the pipe 5.

The crack propagation arrester functions as follows. The fracture that originated in the trunk pipeline and penetrated into the body of the arrester 1 (Fig.2) encounters the boundary between the surfaces of the insert 6 . and pipe 5 and, having terminated on one surface cannot begin at once on the other.

In this point the direction of propagation of the crack changes from longitudinal along the pipeline axis to circular determined by the orientation of the insert 6 and propagation of the cracks along the pipeline stops. The thickness of the insert 6 which is selected larger than 0.3 of the wall thickness of the pipe 5 stops the

- 8 -

crack at any speed of its propagation. Location of the insert 6 at $\alpha$ angle to the axis of symmetry of the pipe 5 rules out possible reduction of strength and stiffness of the arrester 1 provided with inserts 6 and ensures high reliability. The inserts 6 of austenitic steel improve the reliability of the arrester 1 of the pipelines operated at sub-zero temperatures (below minus 40°C).

The inserts 6 made from ceramic materials are conducive to a guaranteed stopping of cracks in pipelines subjected to extrahigh pressures (exceeding 10 - 12 MPa) with thick walls ($\sim$ 30 mm).

The multilayer inserts 6 are particularly convenient for pipelines operating under pressures pulsating within broad limits (7.5 - 12 MPa).

The number of boundaries with a low strength of joint between the adjoining surfaces increased correspondingly to the number of layers provides for a high reliability at sharp changes of pressure.

The method for the production of a crack arrester in H.P. pipelines according to the invention consists in the following.

At least one insert 6 is installed into a mould 8 (ingot mould or crystallizer) at an angle to its vertical axis of symmetry before pouring in liquid metal. The inserts 6 are made from a material whose strength is at least equal to the strength of material of the ingot being cast, e.g. austenitic steel composed of C - 0.12%, Si - 0.8%, $C_2$ - 18-20%, Ni - 8-12%, Ti - 0.3-0.6%, Mn-2%, Fe - the balance, and have a thickness $h_1 \geqslant 0.3 \ H_1$ where $H_1$ is the thickness of the produced ingot. Then liquid metal 9 is poured into the mould 8 producing an ingot with a thickness $H_1$ in which case the strength of the joint between the inserts 6 and the ingot over the adjoining surfaces reaches $0 < P < \sigma_y$. The ingot is hot-rolled to produce a sheet blank 10 (Fig.9b) with a thickness of H in which case the inserts 6 are also deformed and acquire a thickness of $h \geqslant 0.3$ H.

Then the arrester sheet blank 10 (Fig.9c) is moulded so as to locate the ends of the extended inserts 6 on the edges of the blank sheets to be welded after which the longitudinal edges of the sheet blank 10 are welded into a pipe 5 (Fig.9d) of the required geometric dimensions of the arrester.

To provide for regulating the strength of the joint between the insert 6 and the material of the pipe 5 on the adjoining surfaces, two parallel sides 11 (Fig.9b) of the insert 6 in the form of a rectangular parallelepiped are coated with, say, magnesite powder which prevents the material of the insert 6 from being fused with the ingot material in the course of its production.

During hot rolling the ingot is disposed in such a way as to arrange the coated sides 11 square to the plane of the produced sheet blank 10.

Now the invention will be elucidated in greater detail by concrete examples of its realization.

Example 1

The crack arrester 1 was made by taking nine inserts 6 of pipe steel composed of C - 0.1%, Mn - 1.7%, Si -0.3-0.5%, Al - 0.02-0.05%, Nb - 0.05%, V - 0.1%, Fe - the balance, in the form of rectangular parallelepipeds 30 x 400 x 2000 mm where $h_1$ = 400 mm. The inserts 6 were placed into an ingot mould at an angle $\alpha$ = 30° to the vertical axis of the ingot. Then the ingot with inserts 6 was filled with the same pipe steel by the uphill casting method.

After solidification the ingot was stripped to a size of 750 x 1600 x 2200 mm.

The next step was placing the ingot into a heating well and bringing the ingot temperature to 1320°C. The heated ingot was rolled on a plate mill "3600" into slabs which were subsequently rolled into sheets 16.4 mm thick, 2120 mm wide. The thickness of inserts was h = 8.8 mm.

The sheet blanks produced in this manner were expand-

- 10 -

ed and welded along the longitudinal edges with the ends of the inserts 6 protruding on the surface of the edges. Thus a crack propagation arrester 1 was produced in the form of a cylindrical pipe of the same diameter as the pipeline.

Example 2

The crack arrester 1 was produced by taking three inserts 6 of austenitic steel in the form of a rectangular parallelepiped of a square section 250 x 250 x 1100 mm in size where $h_1$ was 250 mm.

Two parallel sides of the insert were coated on 50% of their surface with magnesite powder mixed on soluble glass. The inserts were placed into a mould at an angle $\alpha = 40°$ to the vertical axis of the mould before filling said mould with pipe steel by the uphill casting method. The coating applied to the inserts precluded fusion of the ingot material with the insert material; on uncoated sections of the insert surface the materials of the insert and ingot were fused together forming a joint with a strength of $0 < P < \sigma_y$ of pipe steel. After stripping, the crystallized ingots were 750x1600x2200 mm in size. Said ingots were transferred into heating wells to bring their temperature to 1330°C and were converted by rolling into sheets 16.4 mm thick, 2120 mm wide, 11500 mm long.

The obtained thickness of the inserts was h = 5.6 mm. The produced blanks were shaped into pipes and their longitudinal edges were welded together with the insert ends protruding above said edges. This produced a crack propagation arrester 2120 mm long.

Example 3

The crack arrester was produced in the way described in Example 1 with a sole difference that the inserts had a multilayer structure and were composed of three 10-mm layers each, made of pipe steel.

The insert layers were arranged square to the sheet blank surface.

- 11 -

The crack arresters made in compliance with examples 1,2 were subjected to tests. The testing procedure was as follows.

A closed section of the pipeline with two crack arresters each 2120 mm long and a spacer pipe 2000 mm long was tested.

A pressure of 7.5 MPa was built up and a crack was initiated which, having moved through the spacer pipe, was stopped in the arresters on reaching the first insert 6.

The arrester produced according to example 3 was tested under a pressure varying from 7.5 to 12 MPa.

The crack was stopped in the arresters having reached the first multilayer insert 6 on the boundary between its first and second layers.

The geometric dimensions of the arrester 1 conform fully to the dimensions of pipes and the arrester edges are monolythic which is ensured by the production technology which corresponds completely to the production technology of pipes. The arrester 1 is very stiff due to absence of slits. The structural elements, i.e. inserts 6 are located in the arrester wall and serve as additional strengthening members.

The possibility of using inserts 6 of various configurations and of diverse materials broadens the working capabilities of the crack propagation arrester 1.

The disclosed method of the production of crack arresters is advantageous in that their production technology is in full compliance with the production technology of pipes. The structural element is formed at the ingot-making stage by placing said element into the mould before pouring in liquid metal.

Production of the arrester by the method according to the invention is based on the technological equipment used in pipe manufacture and calls for no additional capital investments.

- 12 -

Exclusion of the winding operation involved in making the multilayer blanks and of the slit-making operation simplifies considerably the production technology and steps up output.

## Industrial Applicability

The invention can be widely used in construction of trunk gas pipelines for localizing extended raptures and for protection against damage of pipeline fittings, river and road crossings, and compressor stations.

- 13 -

C L A I M S

1. A crack propagation arrester for H.P. welded pipelines in the form of a cylindrical pipe (5) of the diameter as that of the pipeline provided in its body with at least one structural element oriented at an angle to the supposed direction of crack propagation c h a r a c t e - r i z e d in that the structural element is made in the form of an insert (6) from a material whose strength is at least equal to the strength of the material of the pipe (5), said insert having an extended shape and a thickness $h \geqslant 0.3 H$ where H = wall thickness of the pipe (5) and arranged so that the projection of the insert (6) on a plane (1) square to the axis of symmetry of the pipe (5) has the form of a ring coaxial with the pipe (5), the strength P of the joint between the insert (6) and the material of the pipe (5) on the adjoining surfaces being within $0 < P < \sigma_y$ where $\sigma_y$ is the yield point of the material of the pipe (5).

2. An arrester as claimed in Claim 1 c h a r a c t e - r i z e d in that the insert (6) is made from the material of the pipe (5).

3. An arrester as claimed in Claim 1 c h a r a c - t e r i z e d in that the insert (6) is made of austenitic steel.

4. An arrester is claimed in Claim 1 c h a r a c - t e r i z e d in that the insert (6) is made of a ceramic material.

5. An arrester as claimed in Claim 1 c h a r a c - t e r i z e d in that the insert (6) is of a multilayer structure in which the layers (7) are arranged square to the axis of symmetry of the pipe (5).

6. A method for the production of a crack propagation arrester for H.P. welded pipelines by making an ingot, hot-rolling it into a sheet blank (10) of the crack arrester, forming at least one structural element in the blank, set at an angle to one of the sheet sides, and

- 14 -

welding the sheet blank into a pipe (5) to suit the required geometric dimensions of the crack arrester  c h a - r a c t. e r i z e d  in that the structural element is formed at the ingot-making stage by placing at least one insert (6) into the mould (8) before filling it with liquid metal, the strength of the insert material being at least equal to the strength of the ingot material, said insert (6) having an extended shape and a thickness $h_1 \geqslant 0.3\ H_1$. where $H_1$ = thickness of the produced ingot and in that, while welding the pipe (5) from the sheet blank (10), said blank (10) is formed so as to locate the ends of the extended inserts (6) on the edges of the sheet blank (10) to be welded together.

7. A method for the production of a crack propagation arrester as claimed in Claim 6  c h a r a c t e r i - z e d  in that the insert (6) has the shape of a rectangular parallelepiped whose two parallel sides (11) before installing the insert (6) into the casting mould (8) are partly covered with a coating which prevents the fusion of the material of the insert (6) with the material of the ingot in the process of its making and the rolling operation is carried out so that the coated sides are perpendicular to the plane of the sheet blank (10).

FIG.1

FIG.2

EP 0 390 925 A1

FIG.3

FIG.4    FIG.5    FIG.6

FIG.7    FIG.8

FIG. 9a

FIG. 9b

FIG. 9c

FIG. 9d

# INTERNATIONAL SEARCH REPORT

International Application No PCT/SU89/00072

## I. CLASSIFICATION OF SUBJECT MATTER (if several classification symbols apply, indicate all) *

According to International Patent Classification (IPC) or to both National Classification and IPC

Int.Cl.5    F61L 13/02, B23K 31/00

## II. FIELDS SEARCHED

| Minimum Documentation Searched [7] | |
|---|---|
| Classification System | Classification Symbols |
| Int.Cl. | F16L 13/02,B23K 28/00,31/00 |

Documentation Searched other than Minimum Documentation
to the Extent that such Documents are Included in the Fields Searched [8]

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | SU,AI, 1060375 (INSTITUT ELEKTROSVARKY IM E.O. PATONA) 15 December 1983(15.12.83) see the claims | 1-5 |
| A | US,A, 3698746 (ATLANTIC RICHFIELD COMPANY) 17 October 1972 (17.10.72) see the claims | 1,6,7 |
| A | US,A, 3870350 (ATLANTIC RICHFIELD COMPANY) 11 March 1975 (11.03.75) see the claims | 1,6,7 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 October 1989 (16.10.89) | 27 October 1989 (27.10.89) |
| International Searching Authority | Signature of Authorized Officer |
| ISA/SU | |

Form PCT/ISA/210 (second sheet) (January 1985)